(19) Europäisches Patentamt
European Patent Office
Office européen des brevets

(11) EP 0 924 027 A2

(12) **EUROPÄISCHE PATENTANMELDUNG**

(43) Veröffentlichungstag:
23.06.1999 Patentblatt 1999/25

(51) Int. Cl.$^6$: **B23Q 17/22**, B27C 1/14

(21) Anmeldenummer: 98123634.2

(22) Anmeldetag: 10.12.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 19.12.1997 DE 19756498

(71) Anmelder:
**Michael Weinig Aktiengesellschaft**
**D-97941 Tauberbischofsheim (DE)**

(72) Erfinder:
• **Albert, Adolf**
**97950 Grossrinderfeld-Gerlachsheim (DE)**
• **Dawidziak, Albrecht**
**97950 Grossrinderfeld (DE)**
• **Horn, Martin**
**63930 Neunkirchen (DE)**
• **Klein, Hubert**
**97877 Wertheim-Nassig (DE)**
• **Körner, Albin**
**97950 Grossrinderfeld (DE)**
• **Kurz, Rainer**
**97922 Lauda-Königshofen-Gerlachsheim (DE)**
• **Lindemann, Uwe**
**97941 Tauberbischofsheim-Diestelhausen (DE)**
• **Eglert, Heinrich**
**97922 Lauda-Königshofen (DE)**

(74) Vertreter: **Kohl, Karl-Heinz**
**Patentanwälte**
**Dipl.-Ing. A.K. Jackisch-Kohl**
**Dipl.-Ing. K.H. Kohl**
**Stuttgarter Strasse 115**
**70469 Stuttgart (DE)**

(54) **Maschine zum Bearbeiten von Werkstücken aus Holz, Kunststoff und dergleichen, vorzugsweise Kehlmaschine, sowie Verfahren zur Verstellung der Spindel einer solchen Maschine**

(57) Die Maschine weist eine drehantreibbare Spindel (4) auf, auf der ein Bearbeitungswerkzeug mit Schneiden sitzt und die quer zu ihrer Achse relativ zu einer Bezugsebene verstellbar ist. Die Schneiden der jeweiligen Bearbeitungswerkzeuge müssen in bezug auf den Maschinentisch, die Anschläge und die Andruckflächen genau eingestellt werden. Dazu ist eine Verstellung der Spindel (4) quer zu ihrer Achse erforderlich. Um die Spindel (4) schnell und genau verstellen zu können, ohne daß ein Probelauf eines Werkstückes (3) nach der Verstellung erforderlich ist, weist die Maschine eine Meßeinrichtung auf, über die die Schneiden des Bearbeitungswerkzeuges in bezug auf die Bezugsebene einstellbar sind. Bei der Maschine und dem Verfahren wird die Meßeinrichtung dazu herangezogen, die Spindelverstellung hochgenau vorzunehmen.

Fig. 1

EP 0 924 027 A2

**Beschreibung**

Die Erfindung betrifft eine Maschine zum Bearbeiten von Werkstücken aus Holz, Kunststoff und dergleichen, vorzugsweise eine Kehlmaschine, nach dem Oberbegriff des Anspruches 1 sowie ein Verfahren zur Verstellung der Spindel einer solchen Maschine nach dem Oberbegriff des Anspruches 11.

Es sind Kehlmaschinen bekannt, auf denen aus Holz bestehende Werkstücke nacheinander verschiedenen Spindeln zugeführt werden, auf denen Bearbeitungswerkzeuge sitzen. Mit ihnen werden die Werkstücke in der gewünschten Weise bearbeitet, beispielsweise zu Fenster- oder Türrahmen. Die Werkstücke werden auf einem Maschinentisch, an Anschlägen und an Andruckelementen durch die Maschine geführt. Die Schneiden der jeweiligen Bearbeitungswerkzeuge müssen in bezug auf den Maschinentisch, die Anschläge und die Andruckflächen, die jeweils Bezugsflächen bilden, genau eingestellt werden. Dazu ist eine Verstellung der Spindel quer zu ihrer Achse notwendig. Hierzu wird der Antrieb der Spindel abgeschaltet und die stehende Spindel von Hand oder auch motorisch in die gewünschte Lage verstellt. Die genaue Lage der verstellten Spindel muß sorgfältig von der Bedienungsperson überprüft werden. Hierzu ist häufig ein Probedurchlauf des Werkstückes erforderlich. Da solche Verstellungen an der Kehlmaschine häufig vorgenommen werden, nämlich immer wenn das Werkzeug ausgetauscht, nachgeschliffen, gejointet wird oder etwas abgestumpft ist, sind erhebliche Rüstzeiten erforderlich. Zudem ist nach jeder Verstellung wenigstens ein Probedurchlauf erforderlich, so daß auch ein entsprechender Ausschuß an Werkstücken anfällt.

Der Erfindung liegt die Aufgabe zugrunde, die gattungsgemäße Maschine und das gattungsgemäße Verfahren so auszubilden, daß die Spindel schnell und genau verstellt werden kann, ohne daß ein Probedurchlauf eines Werkstückes nach der Verstellung erforderlich ist.

Diese Aufgabe wird bei der gattungsgemäßen Maschine erfindungsgemäß mit den kennzeichnenden Merkmalen des Anspruches 1 und beim gattungsgemäßen Verfahren erfindungsgemäß mit den kennzeichnenden Merkmalen des Anspruches 11 gelöst.

Bei der erfindungsgemäßen Maschine und beim erfindungsgemäßen Verfahren wird die Meßeinrichtung dazu herangezogen, die Spindelverstellung hochgenau vorzunehmen. Die Meßeinrichtung wirkt mit den Schneiden des auf der Spindel sitzenden Bearbeitungswerkzeuges zusammen. Sobald die Schneiden des Bearbeitungswerkzeuges eine vorgegebene Lage zur Bezugsebene, vorzugsweise der Tischfläche, haben, wird von der Meßeinrichtung ein Abschaltsignal erzeugt, das dem Bediener signalisiert, den Verstellvorgang von Hand zu beenden oder durch das der motorische Verstellantrieb der Spindel abgeschaltet wird. Die Spindel bleibt darum in der gewünschten Lage stehen.

Vorzugsweise wird das Abschaltsignal erzeugt, wenn die Schneiden des Bearbeitungswerkzeuges einen Meßstrahl eines Sender-Empfänger-Systems unterbrechen. Auf diese Weise sind sehr kurze Rüstzeiten möglich, so daß ein wirtschaftliches Arbeiten mit der erfindungsgemäßen Maschine möglich ist. Mit der Meßeinrichtung läßt sich die Spindel hochgenau verstellen, so daß ein anschließender Probelauf nicht erforderlich ist. Die Spindel muß nicht einmal für den Verstellvorgang abgeschaltet werden. Bei drehender Spindel läßt sich die Verstellung ohne weiteres vornehmen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen

Fig. 1             eine Draufsicht auf einen Teil einer erfindungsgemäßen Holzbearbeitungsmaschine

Fig. 2             in Vorderansicht einen Teil der erfindungsgemäßen Holzbearbeitungsmaschine gemäß Fig. 1,

Fig. 3             in vergrößerter Darstellung eine Meßeinrichtung, die im Bereich einer Spindel der Holzbearbeitungsmaschine nach den Fig. 1 und 2 vorgesehen ist,

Fig. 4             in einer Darstellung entsprechend Fig. 3 eine zweite Ausführungsform einer Meßeinrichtung,

Fig. 5 bis Fig. 9      jeweils verschiedene Ausführungsbeispiele von Meßeinrichtungen an einer Spindel einer Holzbearbeitungsmaschine.

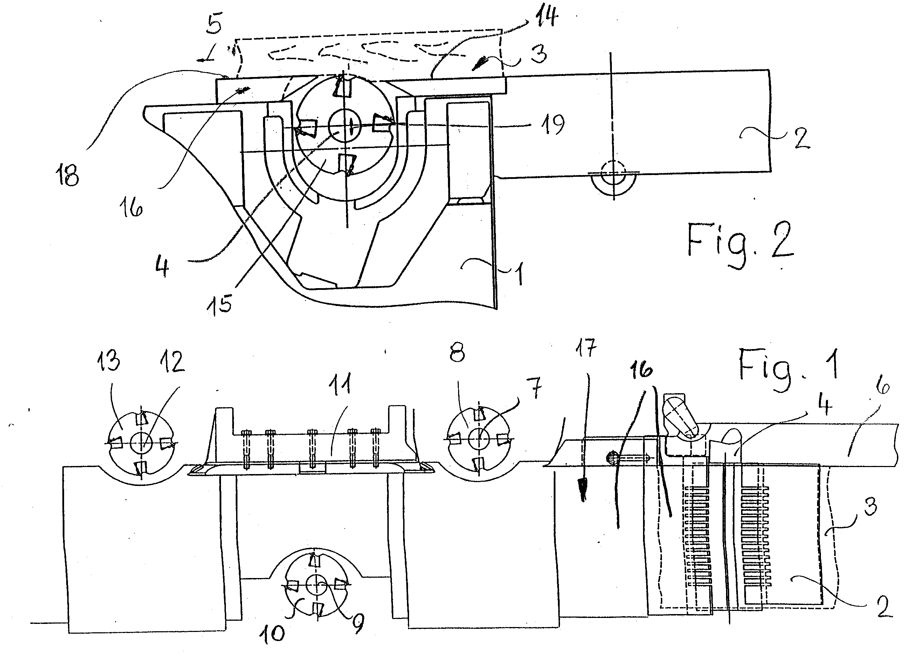

Die Fig. 1 und 2 zeigen einen Teil einer Holzbearbeitungsmaschine, vorzugsweise einer Kehlmaschine. Sie hat einen Maschinenständer 1, an dem ein Abrichttisch 2 angeordnet ist. Auf ihm werden zu bearbeitende Werkstücke 3 aus Holz, Kunststoff und dergleichen in die Maschine transportiert. Auf dem Maschinenständer 1 ist weiterhin ein Maschinentisch 17 angeordnet, der durch einzelne Tischplatten 16 gebildet ist und auf dem die Werkstücke 3 durch die Maschine transportiert werden. Hierfür sind (nicht dargestellte) Transporteinrichtungen vorgesehen, beispielsweise Vorschubwalzen, die drehbar angetrieben sind und auf dem Werkstück 3 aufliegen. Mit ihnen wird das Werkstück auf dem Maschinentisch 17 an Spindeln vorbeigeführt, auf denen Messerköpfe mit Schneiden sitzen, mit denen das Werkstück 3 in der vorgesehenen Weise bearbeitet wird. Wie Fig. 1 zeigt, hat die Kehlmaschine eine untere horizontale Abrichtspindel 4, auf der drehfest ein Messerkopf sitzt, mit dem die Unterseite des Werkstücken 3 glattgehobelt wird. Das Werkstück 3 liegt während seines Transportes in Pfeilrichtung 5 (Fig. 2) mit seiner in Transportrichtung rechten Seite an einem Fügelineal 6 an.

In Transportrichtung 5 mit Abstand hinter der horizontalen unteren Abrichtspindel 4 ist die Kehlmaschine mit einer vertikalen rechten Spindel 7 versehen, auf der drehfest ein Messerkopf 8 sitzt, dessen Schneiden die rechte Längsseite des Werkstückes 3 während seines Durchlaufes durch die Kehlmaschine bearbeiten. Das Fügelineal 6 endet mit Abstand vor dem Messerkopf 8 und ist zur Einstellung einer erforderlichen Spanabnahme am rechten Werkzeug 8 quer zur Transportrichtung 5 verstellbar.

In Transportrichtung 5 mit Abstand hinter der rechten Spindel 7 befindet sich eine vertikale linke Spindel 9, auf der drehfest ein Messerkopf 10 sitzt. Seine Messer, vorzugsweise Profilmesser, bearbeiten die linke Längsseite des Werkstückes 3 bei dessen Durchgang durch die Kehlmaschine. Der Spindel 9 gegenüber liegt ein in Transportrichtung 8 sich erstreckender Anschlag 11, an dem das Werkstück 3 mit seiner rechten Längsseite während der Bearbeitung durch den Messerkopf 10 der linken Spindel 9 anliegt.

Weist die Kehlmaschine, wie im dargestellten Ausführungsbeispiel, eine zweite rechte Spindel 12, dann ist der Anschlag 11 quer zur Transportrichtung 5 verstellbar. Die zweite rechte Spindel 12 trägt einen Messerkopf 13 mit entsprechenden Messern. In Transportrichtung 5 hinter der rechten Spindel 12 kann eine (nicht dargestellte) obere horizontale Spindel vorgesehen sein, mit der die Oberseite des Werkstückes 3 bearbeitet, insbesondere gehobelt wird.

Fig. 2 zeigt beispielhaft, wie das Werkstück 3 an seiner Unterseite 14 mit dem auf der horizontalen unteren Spindel 4 sitzenden Messerkopf 15 bearbeitet wird. Die beim Bearbeiten des Werkstückes 3 anfallenden Späne werden nach unten in bekannter Weise abgesaugt. Nach der Bearbeitung durch den Messerkopf 15 ist das Werkstück 3 dünner als vor der Bearbeitung. Diese Spanabnahme wird durch Verstellen des Abrichttisches 2 quer zur Transportrichtung 5 eingestellt. In Fig. 1 ist das Werkstück 3 mit einer für die Kehlmaschine maximal möglichen Breite mit gestrichelten Linien angedeutet.

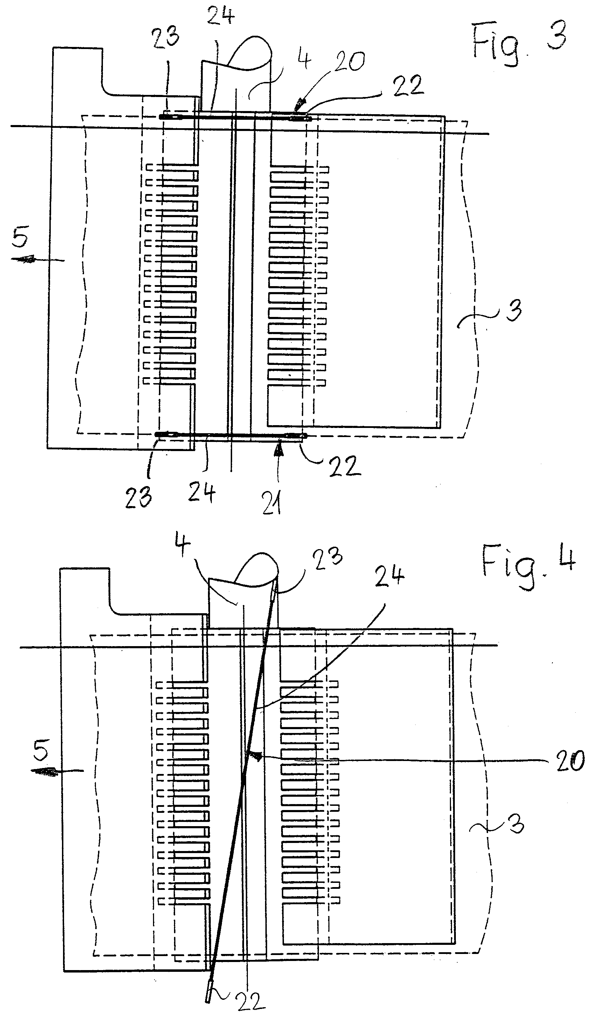

Wie Fig. 2 zeigt, müssen die Schneiden der Messerköpfe 15 auf der Abrichtspindel 4 exakt zur Auflagefläche 18 der Tischplatte 16 eingestellt werden. Damit ist gewährleistet, daß das Werkstück 3 nach der Bearbeitung durch den Messerkopf 15 mit seiner Unterseite 14 in Höhe der Auflagefläche 18 der Tischplatte 16 liegt und exakt geradegehobelt wird. Je nach Flugkreisdurchmesser des Werkzeuges 15 muß die Spindel 4 in Höhenrichtung gemäß Doppelpfeil 19 in Fig. 2 eingestellt werden. Um diese Einstellung sehr genau und vorzugsweise vollautomatisch vornehmen zu können, ist die Bearbeitungsmaschine mit mindestens einer Meßeinrichtung 20 (Fig. 3) versehen. Im folgenden wird diese Meßeinrichtung 20 anhand der horizontalen Abrichtspindel 4 im einzelnen beschrieben. Solche Meßeinrichtungen können jedoch bei jeder verstellbaren Spindel der Bearbeitungsmaschine vorgesehen werden, vorzugsweise bei den vertikalen rechten Spindeln und weiteren unteren Spindeln, so daß notwendige Verstellungen dieser Spindeln einfach und vorzugsweise automatisch vorgenommen werden können. Bei den vertikalen rechten Spindeln bildet immer die nachfolgende Anschlagfläche die Bezugsfläche zur Einstellung der Spindeln, bei den unteren Spindeln die nachfolgende Tischplattenfläche 18.

Beim Ausführungsbeispiel nach Fig. 3 sind für die Abrichtspindel 4 zwei Meßeinrichtungen 20 und 21 vorgesehen, die jeweils gleich ausgebildet sind. Die Meßeinrichtungen 20, 21 bestehen jeweils aus einem Sender 22 und einem Empfänger 23. Die Sender 22 und Empfänger 23 arbeiten nach dem Lichtschrankenprinzip, d.h. ein vom Sender 22 ausgesandter Strahl 24 trifft auf den Empfänger 23. Die Spindel 4 wird so lange in Höhenrichtung 19 verstellt, bis die Schneiden des Messerkopfes 15 diesen Lichtstrahl 24 durchbrechen. In diesem Augenblick befinden sich die Schneiden der Messer in der notwendigen Lage relativ zur Auflagefläche 18 der Tischplatte 16. Die Einstellung der Abrichtspindel 4 erfolgt bei drehendem Messerkopf 15, so daß eine rasche Umstellung der Abrichtspindel 4 gewährleistet ist.

Die beiden Meßeinrichtungen 20, 21 befinden sich quer zur Transportrichtung 5 beiderseits des Arbeitsbereiches des auf der Abrichtspindel 4 sitzenden Messerkopfes 15. Der vom Sender 22 ausgehende Strahl 24 erstreckt sich parallel zur Transportrichtung 5. Zur Höhenverstellung der Abrichtspindel 4 reicht selbstverständlich auch nur eine Meßeinrichtung 20 aus. Die Verwendung zweier Meßeinrichtungen 20, 21 hat den Vorteil, daß sich feststellen läßt, ob die Schneiden parallel zur Tischfläche liegen. Dann müssen beide Meßeinrichtungen 20, 21 den gleichen Schaltpunkt haben.

Beim Ausführungsbeispiel gemäß Fig. 4 erstreckt sich der vom Sender 22 ausgesandte Strahl 24, in Draufsicht auf die Abrichtspindel 4 gesehen, schräg zur Spindelachse. Der Sender 22 und der Empfänger 23 der Meßeinrichtung 22 befinden sich, in Transportrichtung 5 des Werkstückes 3 gesehen, beiderseits des Arbeitsbereiches des auf der Abrichtspindel 4 befindlichen Messerkopfes 15. Wie bei der vorigen Ausführungsform erstreckt sich der Strahl 24 in einer die Auflagefläche 18 enthaltenden Horizontalebene. Wird die Abrichtspindel 4 in der Höhe verstellt, ist die richtige Einstellung gefunden, sobald die Messer des rotierenden Messerkopfes 15 den Strahl 24 unterbrechen. Dann wird augenblicklich die Zustellung der Abrichtspindel 4 in Höhenrichtung unterbrochen.

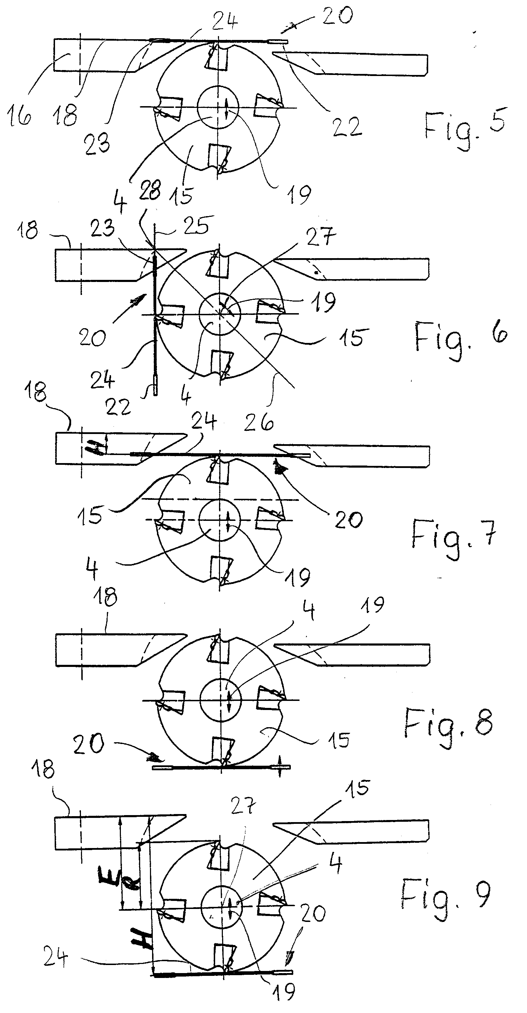

Fig. 5 zeigt die Meßeinrichtung 20 gemäß Fig. 3 in Achsrichtung der Abrichtspindel 4 gesehen. Der Sender 22 und der Empfänger 23 sind so eingebaut, daß sie exakt in der Bezugsebene liegen, in diesem Falle in der Auflagefläche 18 der Tischplatte 16. Die Auflagefläche 18 bildet die Tischebene. Der Strahl 24 verläuft horizontal und in einer die Auflagefläche 18 enthaltenden Ebene. Wird die Abrichtspindel 4 in Höhenrichtung 19 verstellt, dann durchbrechen die Schneiden des drehenden, auf der Abrichtspindel 4 sitzenden Messerkopfes 15 in der exakten Höhe den Strahl 24. Dann sendet die Meßeinrichtung 20 ein entsprechendes Schaltsignal an den Verstellantrieb der Abrichtspindel 4, wodurch die Verstellbewegung beendet wird. Diese Verstellung der Abrichtspindel 4 erfolgt bei rotierender Abrichtspindel, so daß der Drehantrieb für die Höhenverstellung des Messerkopfes 15 nicht abgeschaltet werden muß. Da die Meßeinrichtung in der Tischebene 18 angeordnet ist, muß sie, wie beschrieben, außerhalb des Transportweges der Werkstücke 3 liegen, oder sie muß für den Einstellvorgang erst in die Tischebene 18 gebracht werden, beispielsweise durch pneumatisch getaktete Zylinder.

Fig. 6 zeigt die Möglichkeit, die Meßeinrichtung 20 auch senkrecht zur Bezugsebene, also zur Tischebene 18, anzuordnen. In diesem Falle verläuft der Strahl 24 senkrecht zur Tischebene 18. In diesem Falle erfolgt die Verstellung der Abrichtspindel 4 unter einem Winkel von 45° zur Bezugsebene 18. Die Meßeinrichtung 20 ist hierbei so in die Bearbeitungsmaschine eingebaut, daß die Schneiden des auf der Abrichtspindel 4 sitzenden Messerkopfes 15 das Werkstück 3 im erforderlichen Maße an der Unterseite 14 (Fig. 2) bearbeiten. Die Meßeinrichtung 20 ist so angeordnet, daß die Achse 25 des Strahls 24 und die Achse 26, auf der sich die Achse 27 der Abrichtspindel 4 bei ihrer Verstellung bewegt, einander in der Bezugsebene 18 schneiden (Schnittpunkt 20). Auf diese Weise ist gewährleistet, daß durch die Verstellung unter 45° in Verstellrichtung 19 die Schneiden des Messerkopfes 15 dann die richtige Lage in bezug auf die Bezugsfläche 18 aufweisen, wenn der Strahl 24 durch die Schneiden des rotierenden Messerkopfes 15 unterbrochen wird. In diesem Fall erfolgt die Unterbrechung des Strahles 24 im Bereich unterhalb der Tischebene und damit außerhalb des Transportweges der Werkstücke 3, während sie bei den vorigen Ausführungsbeispielen in der Tischebene stattfand.

Beim Ausführungsbeispiel nach Fig. 7 befindet sich die Meßeinrichtung 20 um ein Maß H im Bereich unterhalb der Bezugsebene 18. Die rotierende Spindel 4 wird so lange senkrecht zur Bezugsebene 18 in Höhenrichtung 19 verstellt, bis die Schneiden des Messerkopfes 15 den Meßstrahl 24 unterbrechen. Dann wird die Verstellung der Abrichtspindel 4 gestoppt oder ein Schaltimpuls an die nachgeschaltete Steuerung gegeben. Da sich nun die Schneiden des Messerkopfes 15 um das Maß H unterhalb der Auflage- bzw. Tischfläche 18 befinden, wird anschließend die Abrichtspindel 4 um das Maß H in Höhenrichtung 19 verstellt. Dann befindet sich der Messerkopf 15 in der exakten gewünschten Lage in bezug auf die Bezugsfläche 18. Diese Verstellung des Messerkopfes 15 um das Maß H erfolgt vorzugsweise motorisch, kann aber auch von Hand erfolgen, und kann bei drehender Abrichtspindel erfolgen. Die Verstellung kann beispielsweise auch mit einem Pneumatikzylinder mit fest eingestelltem Hub H erfolgen.

Bei der Ausführungsform gemäß Fig. 8 befindet sich die Meßeinrichtung 20 auf der der Tischebene 18 gegenüberliegenden Seite des Messerkopfes 15. Die Meßeinrichtung 20 fährt mit dem Messerkopf 15 bzw. der Abrichtspindel 4 mit. Das Verfahrverhältnis beträgt hierbei im Hinblick auf das Verhältnis von Durchmesser zu Radius des Messerkopfes 15 2:1. Die Abrichtspindel 4 wird im vorliegenden Fall wiederum in vertikaler Richtung in Pfeilrichtung 19 bzw. senkrecht in bezug auf die Bezugsebene 18 verstellt. Auch hier ist gewährleistet, daß die Schneiden des Messerkopfes 15 dann die richtige Lage in bezug auf die Bezugsfläche 18 aufweisen, wenn der Strahl 24 durch die Schneiden des rotierenden Messerkopfes 15 unterbrochen wird.

Beim Ausführungsbeispiel nach Fig. 9 ist die Meßeinrichtung 20 auf der der Bezugsebene 18 gegenüberliegenden Seite des Messerkopfes 15 fest eingebaut. Die Meßeinrichtung 20 vermißt den Messerkopf 15 in der Maschine. Der Abstand der Meßebene, d.h. der Ebene, in der der Meßstrahl 24 liegt, und der Bezugsebene 18 beträgt das Maß H. Da die Meßeinrichtung 20 fest eingebaut ist, ist dieses Maß H unveränderlich. Sobald die Schneiden des rotierenden Messerkopfes 15 den Strahl 24 der Meßeinrichtung 20 unterbrochen, hat die Achse 27 der Abrichtspindel 4 den Abstand E von der Bezugsfläche 18. Außer-dem ist in Fig. 9 das Maß R eingezeichnet, das den Radius des Flugkreises der Schneiden des Messerkopfes 15 bezeichnet und sich aus der Differenz der Maße H und E ergibt ( R = H - E ). Die Abrichtspindel 4 muß nunmehr so senkrecht zur Bezugsebene 18 in Richtung 19 verstellt werden, bis das Maß E gleich dem Maß R ist. Dann nimmt der Messerkopf 15 seine exakte Lage in bezug auf die Tischfläche 18 ein. Das Maß E wird in bekannter Weise durch ein in der Maschine eingebautes Wegmeßsystem gemessen.

Bei den beschriebenen Ausführungsbeispielen wird der Meßstrahl 24 jeweils durch die Schneiden des rotierenden Messerkopfes 15 unterbrochen. Die Meßeinrichtung 20 kann auch so ausgebildet sein, daß mit ihr der Abstand zu den Schneiden des Messerkopfes 15 gemessen wird. In diesem Falle wird der von der Meßeinrichtung ainsgesandte Meßstrahl senkrecht zum Messerkopf 15 in Richtung auf die Achse 27 der Abrichtspindel 4 gerichtet. Der vom Messerkopf 15 reflektierte Meßstrahl 24 wird dann vom Empfänger der Meßeinrichtung erfaßt und hieraus die Lage des Messerkopfes 15 zur Bezugsebene 18 bestimmt.

Die Meßeinrichtungen können auch mit Sensoren arbeiten, die nicht nach dem Lichtschranken- oder Reflexionsprinzip, sondern nach anderen physikalischen Prinzipien, wie beispielsweise induktive oder kapazitive Näherungsschalter, Lasertriangulation und dergleichen, arbeiten.

Bei den beschriebenen und dargestellten Ausführungsformen kann der Meßstrahl ein Laserstrahl, ein direkt oder über Lichtleiter erzeugter Lichtstrahl und dergleichen sein. Bei den beschriebenen Ausführungsformen kann die Einstellung jeweils bei mit der Bearbeitungsdrehzahl rotierendem Messerkopf durchgeführt werden. Es ist jedoch auch möglich, die Spindel und das Werkzeug mit einer von der Bearbeitungsdrehzahl abweichenden, vorzugsweise geringeren Drehzahl oder bei stehendem Werkzeug über die Meßeinrichtung einzustellen.

**Patentansprüche**

1. Maschine zum Bearbeiten von Werkstücken aus Holz, Kunststoff und dergleichen, vorzugsweise Kehlmaschine, mit wenigstens einer drehantreibbaren Spindel, auf der ein Bearbeitungswerkzeug mit Schneiden sitzt und die quer zu ihrer Achse relativ zu einer Bezugsebene verstellbar ist,
dadurch gekennzeichnet, daß die Maschine wenigstens eine Meßeinrichtung (20, 21) aufweist, über die die Schneiden des Bearbeitungswerkzeuges (15) in bezug auf die Bezugsebene (18) einstellbar sind.

2. Maschine nach Anspruch 1,
dadurch gekennzeichnet, daß die vorzugsweise stationär angeordnete Meßeinrichtung (20, 21) mit wenigstens einem Sender (22) und wenigstens einem Empfänger (23) versehen ist, die einander vorteilhaft gegenüberliegen, und daß der Sender einen Meßstrahl (24) aussendet, in dessen Strahlweg die Schneiden des Bearbeitungswerkzeuges (15) liegen.

3. Maschine nach Anspruch 1 oder 2,
dadurch gekennzeichnet, daß die Meßeinrichtung (20, 21) relativ zur Bezugsebene (18) verstellbar ist.

4. Maschine nach Anspruch 2 oder 3,
dadurch gekennzeichnet, daß der Meßstrahl (24) in Höhe der Bezugsebene (18) liegt.

5. Maschine nach Anspruch 2 oder 3,
dadurch gekennzeichnet, daß der Meßstrahl (24) im Bereich unterhalb der Bezugsebene (18) verläuft.

6. Maschine nach einem der Ansprüche 2 bis 5,
dadurch gekennzeichnet, daß der Meßstrahl (24) horizontal verläuft.

7. Maschine nach einem der Ansprüche 2 bis 6,
dadurch gekennzeichnet, daß der Meßstrahl (24) quer, vorzugsweise senkrecht zur Bezugsebene (18) verläuft, und daß vorteilhaft die Spindel (4) unter 45° zur Bezugsebene (18) verstellbar ist.

8. Maschine nach Anspruch 7,
dadurch gekennzeichnet, daß die Strahlachse (25) und die Verstellwegachse (26) der Spindel (4) einander in der Bezugsebene (18) schneiden.

9. Maschine nach einem der Ansprüche 1 bis 8,
dadurch gekennzeichnet, daß die Meßeinrichtung (20, 21) auf der der Bezugsebene (18) gegenüberliegenden Seite des Bearbeitungswerkzeuges (15) angeordnet ist.

10. Maschine nach Anspruch 1,
dadurch gekennzeichnet, daß die Meßeinrichtung (20, 21) mit induktiven oder kapazitiven Näherungsschaltern versehen ist.

11. Verfahren zur Verstellung der Spindel der Maschine nach einem der Ansprüche 1 bis 10, bei dem die Spindel quer zu ihrer Achse relativ zu einer Bezugsebene verstellt wird,
dadurch gekennzeichnet, daß die Spindel (4) so weit verstellt wird, bis durch Zusammenwirken eines auf der Spindel (4) sitzenden Bearbeitungswerkzeuges (15) und einer Meßeinrichtung (20, 22) ein Abschaltsignal erzeugt wird, wenn die Schneiden des Bearbeitungswerkzeuges (15) eine vorgegebene Lage zur Bezugsebene (18) einnehmen.

12. Verfahren nach Anspruch 11,
dadurch gekennzeichnet, daß die Meßeinrichtung (20, 21) einen Meßstrahl (24) erzeugt, und daß das Abschaltsignal erzeugt wird, wenn die Schneiden des Bearbeitungswerkzeuges (15) den Meßstrahl (24) unterbrechen.

13. Verfahren nach Anspruch 11 oder 12,
dadurch gekennzeichnet, daß die Spindel (4) senkrecht zur Bezugsebene (18) verstellt wird.

14. Verfahren nach einem der Ansprüche 11 bis 13,
dadurch gekennzeichnet, daß die vorgegebene Lage des Bearbeitungswerkzeuges (15) erreicht ist, wenn das Bearbeitungswerkzeug (15) seine Bearbeitungsposition einnimmt, und daß das Bearbeitungswerkzeug (15) vorzugsweise aus der vorgegebenen Lage in die Bearbeitungsposition verstellt wird.

15. Verfahren nach Anspruch 11 oder 12,
dadurch gekennzeichnet, daß die Spindel (4) schräg zur Bezugsfläche (18), vorzugsweise unter 45°, verstellt wird.

16. Verfahren nach einem der Ansprüche 11 bis 15, dadurch gekennzeichnet, daß die Verstellung bei drehender Spindel (4) erfolgt.

17. Verfahren nach einem der Ansprüche 11 bis 16, dadurch gekennzeichnet, daß die Meßeinrichtung (20, 21) mit dem Bearbeitungswerkzeug (15) im Verhältnis 2:1 mitfährt und vorzugsweise für den Einstellvorgang vorteilhaft durch getaktete Zylinder in die Bezugsebene (18) gebracht wird.

Fig. 2

Fig. 1

Fig. 3

Fig. 4

Fig. 5

Fig. 6

Fig. 7

Fig. 8

Fig. 9